# EUROPÄISCHE PATENTANMELDUNG

(11) **EP 1 156 015 A1**
(43) Veröffentlichungstag der Anmeldung: **21.11.2001**
(21) Anmeldenummer: 00110342.3
(22) Anmeldetag: 15.05.2000
(51) Int. Cl.: C02F 3/12

(54) **Verfahren und Anlage zur Filtraterzeugung aus dem Rücklaufschlammstrom**

(71) Anmelder: VA TECH WABAG ESMIL GmbH, 40878 Ratingen (DE)
(72) Erfinder: Schnüll, Dietmar, 40670 Meerbusch (DE); Brockmann, Martin, 49525 Lengerich (DE)
(74) Vertreter: VA TECH Patente GmbH

(57) **Zusammenfassung**

Gezeigt werden ein Verfahren und eine Anlage zur Filtraterzeugung aus dem Rücklaufschlammstrom (6) biologischer Kläranlagen nach dem Belebungsverfahren bestehend aus zumindest einem Belebungsbecken (1) und zumindest einer Nachklärung (2), wobei zumindest ein Teil des in der Nachklärung anfallenden Schlamms als Rücklaufschlamm (6, 7) in das Belebungsbecken (1) zurückgeführt wird. Aus dem Rücklaufschlamm (6) wird vor dem Einbringen in das Belebungsbecken (1) durch Membranfiltration (8) Flüssigkeit als Filtrat (9) abgezogen. Die Erfindung ermöglicht durch das Entnehmen von Filtrat (9) die Nachklärung (2) zu entlasten, sowie eine höhere Verfahrenssicherheit und eine verbesserte Ablaufqualität zu erzielen und stellt durch die Filterung sicher, dass hygienisch einwandfreies Brauchwasser zur Verfügung gestellt wird.

## Beschreibung

Die Erfindung betrifft ein Verfahren zur Filtraterzeugung aus dem Rücklaufschlammstrom biologischer Kläranlagen nach dem Belebungsverfahren bestehend aus zumindest einem Belebungsbecken und zumindest einer Nachklärung, wobei zumindest ein Teil des in der Nachklärung anfallenden Schlamms als Rücklaufschlamm in das Belebungsbecken zurückgeführt wird, sowie eine entsprechende Anlage.

Die DE 196 21 172 A1 zeigt beispielhaft eine herkömmliche Kläranlage mit Rückführung des Rücklaufschlammes von der Nachklärung in die Belebung, wobei der Überschussschlamm einer Schlammbehandlung zugeführt wird und die dort gewonnene Flüssigkeit wieder dem Abwasserzulauf beigegeben wird.

Bestehende Belebungsanlagen weisen jedoch die folgenden Nachteile auf:
1. Auf Kläranlagen besteht in der Regel ein hoher Bedarf an Brauchwasser, welches beispielsweise zum Absprühen von Rinnen, zum Abreinigen von Siebbändern oder für die Reinigung von Stellplätzen benötigt wird. Die Verwendung des Ablaufs der Nachklärung als Brauchwasser kann jedoch aus hygienischen Gründen nicht uneingeschränkt empfohlen werden.
2. Viele bestehende Nachklärbecken sind nach heutigem Kenntnisstand bezüglich der hydraulische Belastungssituation der Nachklärbecken unterdimensioniert.

Es ist nun eine Aufgabe der vorliegenden Erfindung, die genannten Nachteile zu überwinden und damit ein feststofffreies und hygienisch unbedenkliches Brauchwasser zu gewinnen sowie die Nachklärungen ohne großen bautechnischen Aufwand hydraulisch zu entlasten.

Das erfindungsgemäße Verfahren ist dadurch gekennzeichnet, dass aus dem Rücklaufschlamm vor dem Einbringen in das Belebungsbecken durch Membranfiltration Flüssigkeit als Filtrat abgezogen wird.

Die entsprechende Anlage zur Filtraterzeugung aus dem Rücklaufschlammstrom biologischer Kläranlagen bestehend aus zumindest einem Belebungsbecken und zumindest einem Nachklärbecken, wobei das Nachklärbecken und das Belebungsbecken durch eine Rückführung für den Rücklaufschlamm verbunden sind, ist dadurch gekennzeichnet, dass in der Rückführung zumindest ein Membranmodul jeweils bestehend aus zumindest einem Membranfilter zum Abziehen von Flüssigkeit als Filtrat aus dem Rücklaufschlamm angeordnet ist. Weitere Ausführungsformen der Anlage sind den Unteransprüchen zu entnehmen.

Die Erfindung ermöglicht durch das Entnehmen von Filtrat die Nachklärung zu entlasten, da das Rückführverhältnis reduziert werden kann, und stellt durch die Filterung sicher, dass hygienisch einwandfreies Brauchwasser zur Verfügung gestellt werden kann. Es ist hierzu kein Neu- oder Umbau der Nachklärung erforderlich, es kann jedoch eine höhere Verfahrenssicherheit und eine verbesserte Ablaufqualität erzielt werden.

Weiters ist von Vorteil, dass durch die bei der Filterung erfolgende Belüftung des Rücklaufschlammes der Schlamm einem weiteren Milieuwechsel unterworfen und ausgezehrt wird. Dadurch werden die Prozessstabilität und die Ablaufqualität erhöht.

Alternativ kann der Feststoffgehalt in der Belebung erhöht und damit die Schlammbelastung entsprechend gesenkt werden, was sich positiv auf die Prozessstabilität auswirkt.

Der gesteigerte Feststoffgehalt im Rücklaufschlamm begünstigt die Abreinigung der Membranoberflächen.

Vorteilhaft ist, wenn für die Membranfiltration ein Niederdruck-Membranverfahren verwendet wird. Man spricht von Niederdruck-Membranverfahren, wenn der auf die Membranen wirkende Druck kleiner als 0,1 bis 0,7 bar ist. In der Regel wird das Filtrat mittels einer Saugpumpe aus den getauchten Membranen herausgehoben. Bei einer passenden Einbindung in den Höhenplan und der Auswahl eines geeigneten Membranverfahrens kann auch im Überstaubetrieb gefahren werden, so dass auf die Saugpumpe verzichtet wird.

Bisher wurden Niederdruck-Membranverfahren überwiegend für kompakte Belebungsverfahren, bei denen keine Nachklärung erforderlich ist, eingesetzt. Die betriebliche Erfahrung mit unterschiedlichen Membranverfahren zeigte, dass sich ein gewisser Feststoffgehalt in flockiger Struktur über den sogenannten "Pintch"-Effekt positiv auf die Betriebsstabilität der Anlage auswirkt. Durch die Verwendung von Niederdruckmembranen, insbesondere von Mikrofiltrationsmembranen, im erfindungsgemäßen Verfahren kann im Filtrationsbecken, in dem die Membranmodule angeordnet sind, ein höherer Feststoffanteil im belebten Schlamm erzielt werden als im Belebungsbecken. Dadurch wird nach obigen Ausführungen die systemintegrierte Abreinigung der Membranoberfläche unterstützt.

Bei dem erfindungsgemäßen Verfahren wird das klassische Belebungsverfahren durch die Technik der Membranbelebung unterstützt. Ein kompletter Wechsel auf das Verfahren einer Membranbelebung findet nicht statt, die bestehende Nachklärung wird weiterhin betrieben.

Ein weiteres Merkmal des Verfahrens besteht darin, dass zur Verbesserung der Filtration eine kontinuierliche turbulente Überströmung von in der Membranfiltration angeordneten Membranfiltern erzeugt wird sowie dass die Überströmung durch den Eintrag von Sauerstoff, insbesondere Druckluft, erzeugt wird.

Ein gemeinsames Kennzeichen von Niederdruck-Membranverfahren ist die Erzeugung einer turbulenten Überströmung entlang der Membranoberfläche. Die Strömung wird vorzugsweise durch unterhalb der Membranen eingetragene Druckluft erzeugt, welche vorzugsweise aus der Umgebungsluft über geeignete Gebläse oder Verdichter erzeugt wird. Die Strömung kann über weitere Aggregate, wie durch den Betrieb geeigneter Pumpen, unterstützt werden. Die eingetragene Druckluft dient zumindest teilweise gleichzeitig zur Belüftung des Rücklaufschlammes. Ergänzend können hierzu auch mechanische Aggregate eingesetzt werden.

Der in der Druckluft enthaltene Sauerstoff kann während des Filtrationsvorganges von den Organismen im Rücklaufschlamm aufgenommen werden. Die positiven Aspekte einer Rücklaufschlammbelüftung sind bekannt. Der Vorteil dieser Vorgangsweise liegt darin, dass die Rücklaufschlammbelüftung integrierter Verfahrensbestandteil sein kann und diese ohne weitere Maßnahmen wirksam ist.

Die Erfindung sieht weiters vor, dass der Flüssigkeitsentzug aus dem Rücklaufschlamm zur hydraulischen Entlastung der Nachklärung eingesetzt wird. Die Verringerung der hydraulischen Belastung der Nachklärung ist dadurch gegeben, dass auch mit geringeren Rückführverhältnis ein konstanter Feststoffgehalt im Belebungsbecken eingestellt wird, bzw. bei gleichem Rückführverhältnis ein erhöhter Feststoffgehalt resultiert.

Das erzeugte Filtrat kann entweder direkt dem Ablauf zugegeben oder als Brauch- oder Prozesswasser genutzt werden. Die hygienische Qualität des Brauch- oder Prozesswassers ist durch die Membranfiltration, vor allem bei Verwendung von Mikrofiltrationsmembranen, sichergestellt.

Eine Ausführung der Erfindung sieht vor, dass die Menge des abgezogenen Filtrats abhängig von der hydraulischen Belastung der Nachklärung eingestellt wird. Dies kann dadurch erzielt werden, dass die Membranfiltrationsstufe modular aufgebaut ist. Jedes Modul liefert eine bestimmte Menge von Filtrat. Bei hoher Belastung der Nachklärung werden entsprechend viele Module angeordnet, die nach Bedarf zu- oder abgeschaltet werden können.

Die Erfindung wird anhand der schematischen Figuren 1 bis 3 beispielhaft erläutert.

Fig. 1 zeigt eine Darstellung einer Belebung einer Kläranlage mit Belebungsbecken und Nachklärung, ergänzt um eine erfindungsgemäße Membranfiltrationsstufe.

Fig. 2 zeigt beispielhaft die Skizze eines Membranmoduls der Niederdruckmembranfiltration mit flächigen Membranfiltern (Plattenmembranen).

Fig. 3 zeigt beispielhaft den Aufbau eines flächigen Membranfilters.

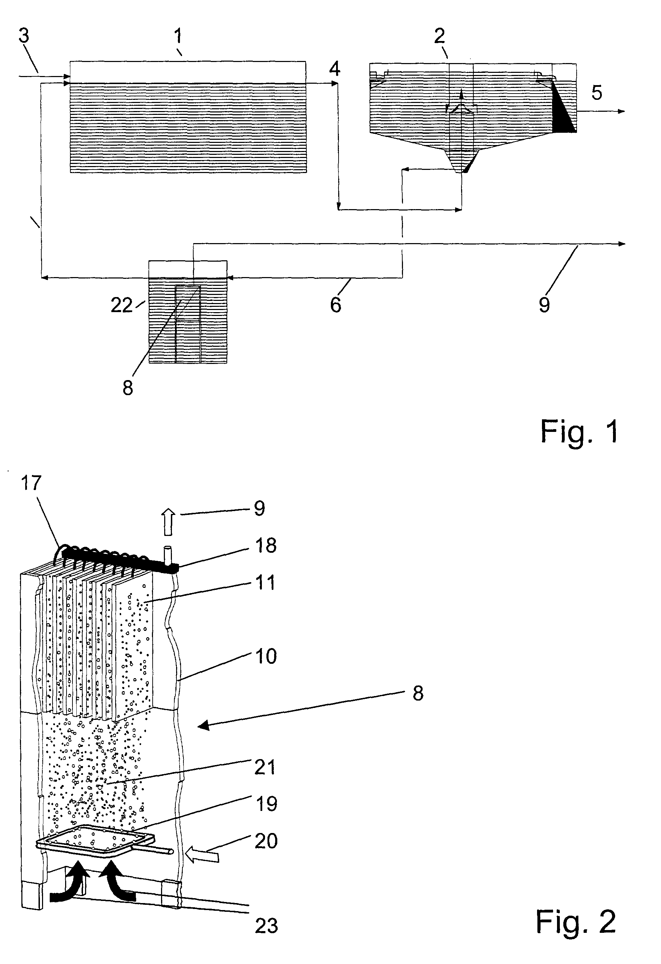

Fig. 1 zeigt eine Kläranlage mit einem Belebungsbecken 1 und einem Nachklärbecken 2, wobei dem Belebungsbecken 1 zu reinigendes Abwasser über den Zulauf 3 zugeführt und das vorgereinigte Abwasser 4 dem Nachklärbecken 2 zugeführt wird. Das im Nachklärbecken 2 gereinigte Wasser wird über den Ablauf 5 abgezogen.

Der sich im Nachklärbecken 2 absetzende Schlamm wird zumindest teilweise über eine Rückführung, die aus einer Zuführung 6 für das Filtrationsbecken 22 und einer Zuführung 7 für das Belebungsbecken 1 besteht, in das Belebungsbecken 1 zurückgeführt. Im Filtrationsbecken 22 sind ein oder mehrere Membranmodule 8 angeordnet. Dem Rücklaufschlamm wird durch die Membranmodule 8, die aus einzelnen Membranfiltern 11 bestehen, Flüssigkeit entzogen und das so gewonnene reine Filtrat 9 als Brauch- oder Prozesswasser abgezogen. Der konzentrierte Rücklaufschlamm wird über die Zuführung 7 wieder dem Belebungsbecken 1 zugeführt.

Der in Fig. 2 beispielhaft dargestellte Membranmodul 8 ist Bestandteil einer als Membranbelebung bezeichneten Kombination eines hier als Filtrationsbecken 22 bezeichneten Belebungsbeckens mit einer Partikel abfiltrierenden Membran zur Schlammrückhaltung und wird als ganzes in den belebten Schlamm dieses Filtrationsbeckens 22 eingetaucht, sodass der Membranmodul 8 unterhalb des Flüssigkeitsniveaus des Filtrationsbeckens 22 angeordnet ist. Der Membranmodul 8 besteht aus einem Reaktorbehälter 10, in dessen oberem Bereich mehrere Membranfilter 11, hier beispielhaft in flacher Ausführung, senkrecht und parallel zueinander in einem bestimmten Abstand voneinander angeordnet sind.

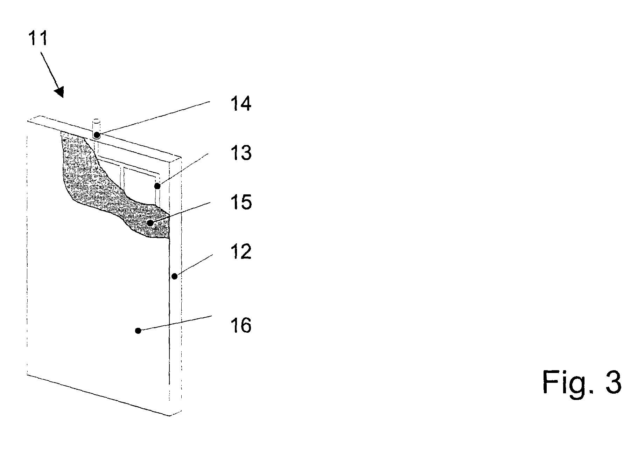

Beispielhaft bestehen die flachen Membranfilter 11 gemäß Fig. 3 aus einem rechteckigen rahmenförmigen Membranträger 12 mit eingeprägten Kanälen 13 zur Filtratführung, die sich zu einem aus dem Membranträger 12 führenden Saugstutzen 14 vereinigen. Die Sammelkanäle 13 sind von einem Drainagevlies 15 abgedeckt, welches wiederum von einer Membran 16 überdeckt ist. Vorder- und Rückseite sind dabei gleich aufgebaut. Die beiden Membranen 16 sind so mit dem Membranträger 12 verbunden, dass das zu reinigende Wasser nur über die Membranen 16 in das Innere gelangen kann.

Die in den Innenraum gelangende Flüssigkeit wird beim Durchtritt durch die Membranen 16 gereinigt, sammelt sich in den Sammelkanälen 13 und wird von dort als Filtrat über den Saugstutzen 14 und über eine daran anschließende Leitung 17 in die Filtratsammelleiste 18 des Membranmoduls 8 gefördert, von wo aus das Filtrat 9 über eine Sammelleitung abgeleitet wird.

Im unteren Bereich des Membranmoduls 8 ist ein Belüfter 19 vorgesehen, der beispielsweise Umgebungsluft 20, die mit einem Kompressor verdichtet wird, in die zu reinigende Flüssigkeit einbringt.

Die Luft steigt durch den Aufströmkanal 21 und zwischen den Membranfiltern 11 nach oben und weiter an die Beckenoberfläche. Durch die entstehende Mammutpumpe wird im Fußbereiches des Reaktorbehälters 10 belebter Schlamm (Suspension 23) eingesogen. Der aufwärts mitgeführte belebte Schlamm tritt oben aus dem Reaktorbehälter 10 aus und mischt sich in die umgebende Flüssigkeit ein.

Als Membran 16 wird eine Partikel abscheidende Membran (UF-Ultrafiltration oder MF-Mikrofiltration) eingesetzt, die beispielsweise eine Porengröße von etwa 0,05 - 0,4 µm aufweist, und die Feststoffe, Keime und Bakterien sicher zurückhält.

Das Filtrat kann durch transmembranen Sog (Unterdruckbetrieb) oder durch transmembranen Druck (Überstaubetrieb) erzeugt werden. Um den erforderlichen Druck für die Membranfilter 11 sicherzustellen, ist ein Überstau von ca. 0,5 - 1,5 m des Wasserspiegels über der Höhe des Ablaufes ausreichend. Im Unterdruckbetrieb wird der erforderliche Sog filtratseitig durch ein geeignetes Aggregat erzeugt. Als Saugvorrichtung können z.B. ein Saugheber, eine Saugpumpe oder ein Unterdruckkessel mit einer angeschlossenen Vakuumpumpe zur Anwendung kommen.

Die höhenmäßige Anordnung der Membranfiltrationsstufe ist variabel und abhängig von der Lage des Wasserspiegels des Filtrationsbeckens 22 im Vergleich zu den bestehenden Becken. Sie erhält freien Zulauf, wenn der Wasserspiegel unterhalb des Flüssigkeitsniveaus des Nachklärbeckens 2 liegt, sie erhält freien Ablauf, wenn er oberhalb des Flüssigkeitsniveaus des Belebungsbeckens 1 liegt. Der jeweils andere Ablauf oder Zulauf wird entsprechend gehoben, genauso, wie es bei der Förderung von Rücklaufschlamm üblich ist. Beispielsweise ist in Flussrichtung des Rücklaufschlamms 6, 7 gesehen vor und/oder nach dem Membranmodul 8 zumindest eine Fördereinrichtung angeordnet.

Die gelegentlich durchzuführende Reinigung der Membranfilter 11 kann als Cleaning-In-Place erfolgen, indem eine Reinigungslösung über eine Dosiereinheit filtratseitig in die Membranfilter 11 eines Membranmoduls 8 gefördert wird. Die Menge an Reinigungslösung, die durch die Membranen 16 in den belebten Schlamm gelangt, ist so gering, dass eine Beeinträchtigung der biologischen Reinigungsleistung nicht eintritt. Ist die Einwirkzeit von 0,5-2h verstrichen, wird die restliche Reinigungslösung aus den Membranfiltern 11 abgezogen und anschließend die Filtration in diesen Membranfiltern 11 wieder in Betrieb genommen. Während der Dauer der Reinigung übernehmen die übrigen Membranmodule 8 die Filtration.

Ist eine intensivere Reinigung der Membranfilter 11 notwendig, so können die Membranfilter 11 aus dem Reaktorbehälter 10 entnommen werden. Die Membranfilter 11 können anschließend überprüft, gereinigt und gegebenenfalls ausgetauscht werden.

Der Membranfilter 8 zeichnet sich durch seinen einfachen Aufbau aus. Die Wartung der Anlage beschränkt sich auf die Kontrolle der zugeführten Luftmenge 20 und des Sauerstoffgehalts im Reaktorbehälter 10 sowie die Kontrolle des Filtratvolumensstromes und des transmembranen Drucks.

Eine erfindungsgemäße Membranfiltrationsstufe kann im Sinne eines modularen Aufbaus aus mehreren Reaktorbehältern 10 bestehen, die unabhängig voneinander jeweils einen bestimmten Teil des Rücklaufschlammes filtern.

Zur erfindungsgemäßen Anwendung sind auch alle anderen Niederdruck-Membranfiltrationsverfahren geeignet, z.B. Systeme, die Hohlfasermembranen, Röhrenmembranen oder Kassetten mit Flachmembranen aufweisen.

## Patentansprüche

1. Verfahren zur Filtraterzeugung aus dem Rücklaufschlammstrom (6) biologischer Kläranlagen nach dem Belebungsverfahren bestehend aus zumindest einem Belebungsbecken (1) und zumindest einer Nachklärung (2), wobei zumindest ein Teil des in der Nachklärung anfallenden Schlamms als Rücklaufschlamm (6, 7) in das Belebungsbekken (1) zurückgeführt wird, **dadurch gekennzeichnet, dass** aus dem Rücklaufschlamm (6) vor dem Einbringen in das Belebungsbecken (1) durch Membranfiltration (8) Flüssigkeit als Filtrat (9) abgezogen wird.

2. Verfahren nach Anspruch 1, **dadurch gekennzeichnet, dass** für die Membranfiltration (8) ein Niederdruck-Membranverfahren verwendet wird.

3. Verfahren nach Anspruch 1 oder 2, **dadurch gekennzeichnet, dass** zur Verbesserung der Filtration eine kontinuierliche turbulente Überströmung von in der Membranfiltration (8) angeordneten Membranfiltern (11) erzeugt wird.

4. Verfahren nach Anspruch 3, **dadurch gekennzeichnet, dass** die Überströmung durch den Eintrag von Sauerstoff, insbesondere Druckluft (20), erzeugt wird.

5. Verfahren nach einem der Ansprüche 1 bis 4, **dadurch gekennzeichnet, dass** der Flüssigkeitsentzug aus dem Rücklaufschlamm (6) zur hydraulischen Entlastung der Nachklärung (2) eingesetzt wird.

6. Verfahren nach einem der Ansprüche 1 bis 5, **dadurch gekennzeichnet, dass** das Filtrat (9) als Brauch- oder Prozesswasser weiterverwendet wird.

7. Verfahren nach einem der Ansprüche 1 bis 6, **dadurch gekennzeichnet, dass** die Menge des abgezogenen Filtrats (9) abhängig von der hydraulischen Belastung der Nachklärung (2) eingestellt wird.

8. Anlage zur Filtraterzeugung aus dem Rücklaufschlammstrom (6, 7) biologischer Kläranlagen bestehend aus zumindest einem Belebungsbecken (1) und zumindest einem Nachklärbecken (2), wobei das Nachklärbecken (2) und das Belebungsbecken (1) durch eine Rückführung (6, 7) für den Rücklaufschlamm verbunden sind, **dadurch gekennzeichnet, dass** in der Rückführung (6, 7) zumindest ein Membranmodul (8) jeweils bestehend aus zumindest einem Membranfilter (11) zum Abziehen von Flüssigkeit als Filtrat (9) aus dem Rücklaufschlamm angeordnet ist.

9. Anlage nach Anspruch 8, **dadurch gekennzeichnet, dass** der auf die Membranen (16) der Membranfilter (11) wirkende Druck auf einen Wert kleiner als 0,1 bis 0,7 bar einstellbar ist.

10. Anlage nach einem der Ansprüche 8 bis 9, **dadurch gekennzeichnet, dass** der Membranfilter (11) partikelabscheidende Ultra- oder Mikrofiltrationsmembranen (16) aufweist.

11. Anlage nach einem der Ansprüche 8 bis 10, **dadurch gekennzeichnet, dass** der Membranmodul (8) eine Vorrichtung (19) zur kontinuierlichen turbulenten Überströmung der Membranfilter (11) aufweist.

12. Anlage nach einem der Ansprüche 8 bis 11, **dadurch gekennzeichnet, dass** das Membranmodul (8) zur Belüftung des Rücklaufschlammes eine Vorrichtung (19) zur Zuführung von Sauerstoff, insbesondere in Form von Druckluft (20), aufweist.

13. Anlage nach einem der Ansprüche 8 bis 12, **dadurch gekennzeichnet, dass** die Anlage mehrere Membranmodule (8) umfasst.
